**Europäisches Patentamt**

**European Patent Office**

**Office européen des brevets**

(19)

(11) Publication number: **0 038 019**
A1

## (12) EUROPEAN PATENT APPLICATION

(21) Application number: **81102654.1**

(22) Date of filing: **08.04.81**

(51) Int. Cl.³: **B 60 C 9/06**

(30) Priority: **16.04.80 IT 2139580**

(43) Date of publication of application: **21.10.81**
**Bulletin 81/42**

(84) Designated Contracting States: **BE DE FR GB LU NL**

(71) Applicant: **SOCIETA PNEUMATICI PIRELLI S.p.A.,**
**Piazzale Cadorna, 5, I-20123 Milan (IT)**

(72) Inventor: **Mezzanotte, Mario, Via Argelati, 28, Milan (IT)**
Inventor: **Turchetti, Gianni, Via Camelia No. 15, Cusano**
**Milanino (Milan) (IT)**

(74) Representative: **Dr. E. Wiegand Dipl.-Ing. Niemann Dr.**
**M. Kohler, Dipl.-Ing. C. Gernhardt Dipl.-Ing. J. Glaeser**
**Patentanwälte Herzog-Wilhelm-Strasse 16,**
**D-8000 München 2 (DE)**

(54) **Improvements in radial tires comprising reinforcements in the sidewalls.**

(57) The invention concerns a pneumatic radial tyre comprising two reinforcing metallic layers (11, 12) in each sidewall and an additional flipper in the upper portion of the sidewall, said flipper being constituted by the folding of the axial inner layer (11) around the second layer (12).

EP 0 038 019 A1

# IMPROVEMENTS IN RADIAL TIRES COMPRISING REINFORCEMENTS IN THE SIDEWALLS

The present invention refers to radial tires, i.e. to tires provided with a carcass whose metallic or textile cords lie in radial planes; more particularly, the invention concerns reinforcements inserted in the sidewalls of such tires.

Tires provided with reinforcing elements inserted in the sidewalls are already known. Said reinforcing elements inserted in the sidewalls have the purpose of opposing the deformability in transversal sense avoiding consequently the contact with the ground when there are stresses perpendicular to the equatorial plane of the running tire, as it for example happens at high speeds when the tire is running along a curved trajectory or under the effect of the wind thrust acting in transversal sense to the running of the vehicle.

Generally, said reinforcements can comprise in addition to the usual fillers of rubber placed around the bead cores, some strips or textile or metallic cords extending radially from the bead core zone up to about one half of the height of the tire section. Also, separately or in addition to the cited elements there are one or more strips of cords, inclined with respect to the circumferential lines of the tire and extending from the bead core zone as far as the tire sidewalls, for example a single ply of textile cords folded upon itself in proximity of the tire shoulder with skirtings of the ply extending from the folding edge up to in proximity of the bead cores.

Unfortunately the cited and other known solutions although overcoming some of the drawbacks found in the past are not such as to guarantee completely a sufficient lateral stability of the tire in use, i.e. said solutions do not permit to withstand the stresses transversally to the running direction of the vehicle without excessive deformations of the sidewalls.

In fact, an insufficient stiffness of the reinforcing structure of the sidewalls of any prior art tire has been ascertained in some cases at high speeds and under the effect of high transversal forces.

Therefore there is a need to improve the already known reinforcing structures inserted in the sidewalls of a radial tire, and Applicant in seeking a better solution was faced with very complicated problems since the more obvious solutions consisting in increasing the number of the reinforcing layers to improve the stiffening of the sidewall, lead to the drawback of a less radial flexibility of the sidewall with consequent unacceptable less comfort under the running conditions.

The search of an optimal solution is still more difficult for the fact that athigh speeds in the zone in which usually there is a discontinuity of stiffness between reinforcement of the final part in the sidewall and annular reinforcing structure between carcass and tread, owing to the considerable stresses and to the intense heating, a relative drawing away between the ends of the adjacent reinforcing layers inserted in the sidewall with consequent remarked lateral instability of the tire takes place. Consequently, the present invention aims to provide a radial tire comprising reinforcements in the sidewalls devoid of the above cited drawbacks.

The object of the present invention is a pneumatic tire comprising a radial carcass formed by cords lying in substantially radial planes, said cords extending from one bead to the other and being turned around the bead cores, a tread and an annular reinforcing structure between the carcass and the tread, said tire being characterized by the fact of comprising in each tire sidewall at least two layers, first and second, the first layer being axially outside the carcass, and the second axially outside the first layer, said layers being constituted by metallic cords inclined with respect to the direction of the carcass cords and crossing the one with the other, the first layer being arranged axially outside the bead turn-up and radially extending from the bead core zone as far as the tire shoulder, said first layer furthermore being folded upon itself, and extends from the tire shoulder up to a point situated in the sidewall at one height corresponding to between 2o% and 6o% of the tire section height , said second layer being in a position axially outside the first layer and axially inside the folded portion of the first layer and extending radially from the tire shoulder toward the bead zone for a predetermined height of the tire section of a value higher than 5o% of the height of the tire section.

The essential features of the invention consist substantially in inserting in each sidewall two different layers of metallic cords, crossed with one another, and in the flipper suitable to keep joined together said two layers in the upper portion of the sidewall, i.e. the portion near the tread.

The flipper is particular since it is formed by parts of the first layer of cords which in proximity of the tire shoulder is folded around the upper edge of the second layer. The two parts of the first layer constituting the flipper will be called hereinafter inner skirting and outer skirting.

Pneumatic tires realized as just explained have demonstrated in use a lateral stability higher than the pneumatic tires of the state of the art.

The result achieved has not a univocal and sure explanation since the phenomena arising in the sidewall of the tire in use are various and not completely clear. However, Applicant thinks to make the following hypotheses without being bound to the purposes of the invention.

In the known tires for example with at least a textile layer inserted in the sidewall, owing to the different deformations which could occur to the two sidewalls of the tire when it runs along a curved trajectory, in the portions of the sidewalls near the contact area, the cords of the reinforcing layer of the inner sidewall with respect to the curve are subjected to traction withstanding suitably the stresses. The cords of the reinforcing layers of the outer sidewall with respect to the curve, under the effect of the weight to which the tire is subjected and the transversal thrust are, however, compressed, and because being formed with textile material which, as known, does not have compression resistance, there is insufficient lateral stiffness of the tire.

Supposing that what just explained be valid, i.e. that the two sidewalls have a different deformation when the tire runs along a curved trajectory, this negative situation is not present in the tire according to the invention since the metallic cords of the two layers inserted in each sidewall have a resistance to compression and to traction in both the two crossing directions and produce consequently a suitable lateral stiffness of the sidewall.

Moreover, the greater lateral stability of the present tire with respect to known tires, is noted in particular in the upper portion of the sidewall where, at high speeds, there are no phenomena of separation between the ends of the two adjacent layers.

In this connection it can be stated that in the present tire the outer skirting of the first layer, folded upon the inner skirting at the upper edge of the second layer and embedded in the elastomeric material of the sidewall which becomes expanded in consequence of the inflation pressure, and is able to exert in the running of the tire a traction action or a recalling action on the second layer obliging it to remain in tight contact with the inner skirting.

The present invention will be explained on the basis of the enclosed sheets of drawings in which, by way of example:

- figure 1 represents the transversal section of one half of the tire according to the present invention;
- figure 2 represents in perspective view with parts broken away one half of a tire according to the invention.

The tire 1 comprises a radial carcass 2, a tread 3, an annular reinforcing structure 4 inserted between carcass 2 and tread 3. The radial carcass 2 comprises textile or metallic cords arranged in radial planes, said cords extending from one bead to the other, with turned in each bead from the inside towards the outside of the tire around the bead cores 5 on which rubber fillers 6 having a hardness comprised between $70^{\circ}$ and $90^{\circ}$ Shore A are applied. The bead core-filler 5, 6 assembly is on its turn wrapped by a flipper formed by a ply 7 of nylon cords inclined of $35^{\circ}$ with

respect to the circumferential lines of the tire (figure 2).

The annular reinforcing structure 4 comprises a layer 8 of metallic cords parallel and inclined between $15^{\circ}$ and $35^{\circ}$ and preferably at $2o^{\circ}$ with respect to the equatorial plane, a second layer 9 of metallic cords parallel and inclined with respect to the equatorial plane symmetrically to the underlying cords, and a third layer lo of cords directed parallel to the equatorial plane and formed by a textile material which shrinks or becomes shorter when subjected to heat, for example nylon.

A reinforcing structure is inserted in each sidewall, said structure comprising, starting from the carcass inside towards the outside, at least two layers 11,12 of metallic cords parallel in each layer and crossed with respect to those of the adjacent layer.

The first layer 11 is applied in axially outer position with respect to the bead turn-up 16 and extends from the bead core zone radially up to the tire shoulder and in this zone said first layer 11 is folded around the upper edge 13 of the second adjacent layer 12 to extend then radially towards the inside where it is defined by reference numeral 14.

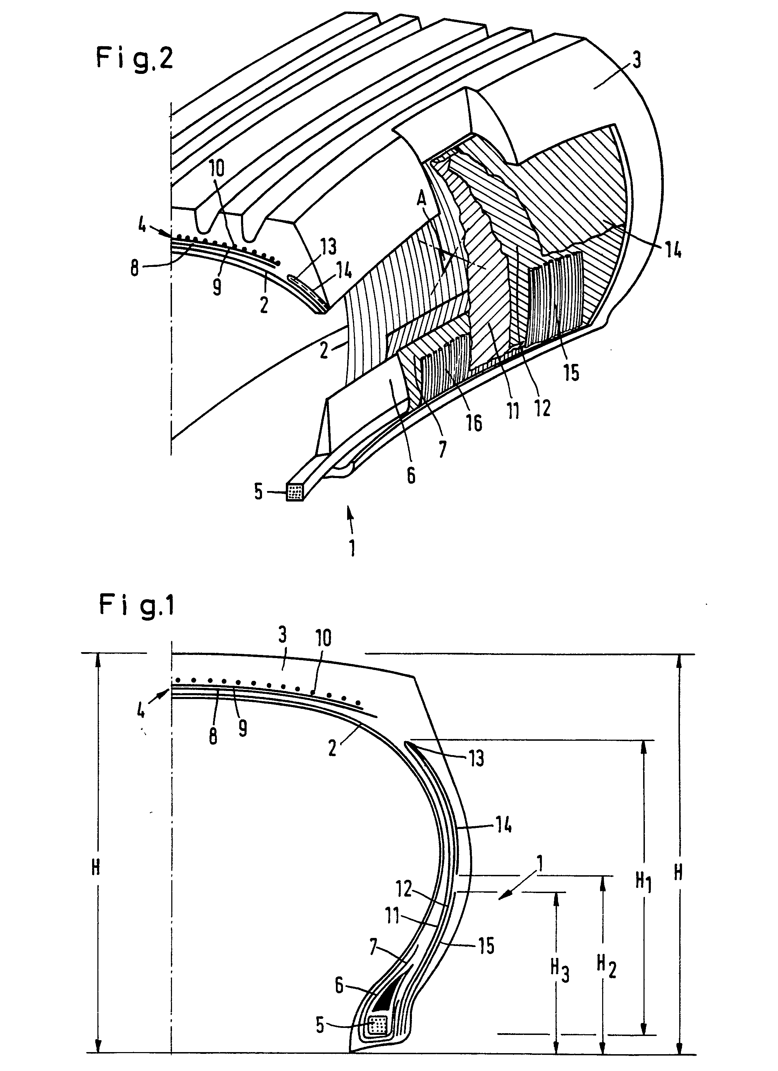

The second layer 12 comprises an upper part between the two skirtings of the layer 11, 14 with its own upper edge 13 lying opposite to the inner folding edge of the first layer 11, 14, said second layer 12 extending radially toward the inside for a predetermined height $H_1$ (figure 1) of the tire section height $H$ at least for a value higher than 5o% of height $H$. As represented, the second layer 12 extends from the bead zone radially up to the tire shoulder.

In the preferred embodiment as shown in figure 1, the second layer 12 extends radially from the bead zone up to the inner folding edge of the first layer 11,14.

The outer skirting 14 of the first layer 11, 14 extends down to a point situated at a height $H_2$ (figure 1) corresponding to between 2o% and 6o% of the tire section H, and preferably at a height corresponding to 5o% of the tire section height H.

The cords of the two layers 11, 14 and 12 can form with the carcass radial cords angles comprised between $2o^O$ and $5o^O$ and preferably of $45^O$.

Further it has been found advantageous to use long lay cords having the formation 3 x 3 x o.12 i.e. three strands each strand having three wires of o.12 mm of diameter.

The reinforcing structure inserted in the sidewall can be completed in the lower portion by a further layer 15 of metallic cords arranged in an axially outer position with respect to the second layer 12 and extending preferably up to one half height of the tire section (see $H_3$ in figure 1).

The metallic cords of the layer 15 having a formation 4 x 3 x o.22 are of the high elongation type and are directed parallel to the carcass radial cords.

A tire described and illustrated in the figures shows a high lateral stiffness for the fact that the metallic cords of the two layers 11, 14 and 12 inserted in each sidewall and the carcass radial cords originate on its whole a plurality of triangles (see A in figure 2), therefore, per se very firm resistant structures.

0038019

This high stiffness is also present in the upper portion of the sidewall thanks to the  action of the particular flipper of the invention, suitable to keep, as on the other hand has been proved, the adherence between the two reinforcing layers 11, 12, also at high speeds, for example also for speeds of 25o km/h.

Although a particular embodiment of the invention has been illustrated and described, it is understood that the invention includes in its scope any other alternative embodiment accessible to a technician of the field; for example the metallic cords of the layers 11 and 12 could have also diameter comprised between o.12 and o.25 mm.

Claims

1.  Pneumatic tire comprising a radial carcass (2) formed by cords lying in substantially radial planes, said cords extending from a bead to the other and being turned around the bead cores (5), a tread (3) and an annular reinforcing structure (4) between carcass and tread, said pneumatic tire being characterized by the fact of comprising in each tire sidewall at least two layers (11, 14 and 12), first and second, the first layer (11, 14) being axially outside the carcass (2) and the second layer (12) axially outside the first layer, said layers being constituted by metallic cords inclined with respect to the direction of the carcass cords and crossing the one with the other, the first layer being arranged axially outside the bead turn-up and extending radially from the bead core zone up to the tire shoulder, said first layer furthermore being folded upon itself, and extends from the tire shoulder down to a point situated in the sidewall at a height ($H_2$) corresponding to between 2o% and 6o% of the tire section height (H), said second layer (12) being in a position axially outside of the first layer (11) and axially inside the folded portion (14) of the first layer (11) and extending radially from the tire shoulder toward the bead zone for a predetermined height of the tire section of value higher than 5o% of the tire section height (H).

(2)  Pneumatic tire as in claim 1, characterized by the fact that said second layer (12) extends from the bead zone radially up to the tire shoulder.

(3)  Pneumatic tire as in claims 1 or 2, characterized by the fact that said metallic cords of the first (11) and second layer (12) are inclined with respect to the direction of the carcass radial cords at angles comprised between 2o$^o$ and 5o$^o$.

(4)   Pneumatic tire as in claim 3, characterized by the fact that said metallic cords of the first (11) and second (12) layer are inclined with respect to the direction of the carcass radial cords in an angle of 45°.

(5)   Pneumatic tire as in anyone  of the preceding claims, characterized by the fact that the cords of the two layers (11, 12) are long lay cords.

(6)   Pneumatic tire as in anyone of the preceding claims, characterized by the fact that the cords of the two layers are of the type 3 x 3 x o.12.

(7)   Pneumatic tire as in anyone of the preceding claims, characterized by the fact of comprising in the lower portion of the sidewall a; layer (15) of metallic cords arranged in an outer axially position to the second layer (12) and directed as the carcass radial cords.

(8)   Pneumatic tire as in claim 7, characterized in that the cords of the layer (15) arranged in an outer axially position to the second layer (12) and directed as the carcass radial cords are cords of the high elongation type.

Fig.2

0038019

Fig.1

European Patent Office

**EUROPEAN SEARCH REPORT**

0038019

EP 81 10 26

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | NL - A - 65 13314 (MICHELIN)<br>  * Page 3, line 1- page 4, line 22 *<br>& GB - A - 1 148 316<br>& GB - A - 1 126 951<br>-- | 1-4 | B 60 C 9/06 |
| | FR - A - 1 378 055 (MICHELIN)<br>  * Page 2, left-hand column, paragraphs 2,3 *<br>& GB - A - 1 062 455<br>-- | 1,3 | |
| | FR - A - 1 502 689 (MICHELIN)<br>  * Page 1, right-hand column, paragraph 2 - page 2, left-hand column, paragraph 1 *<br>& GB - A - 1 169 438<br>-- | 1 | **TECHNICAL FIELDS SEARCHED (Int. Cl.³)**<br><br>B 60 C 9/06 |
| PE | EP - A - 0 017 258 (PIRELLI)<br>  * Whole document *<br>-- | 1-3,6,8 | |
| A | LU - A - 77 020 (BRIDGESTONE) | | CATEGORY OF CITED DOCUMENTS |
| A | FR - A - 2 386 423 (PIRELLI) | | X: particularly relevant |
| A | FR - A - 2 325 524 (PIRELLI)<br>-- | | A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family.<br>corresponding document |

The present search report has been drawn up for all claims

| Place of search | Date of completion of the search | Examiner |
|---|---|---|
| The Hague | 28-07-1981 | SCHMITT |

EPO Form 1503.1   06.78